## Europäisches Patentamt
## European Patent Office
## Office européen des brevets

(11) Numéro de publication: **0 121 482**
**B1**

(12) **FASCICULE DE BREVET EUROPEEN**

(45) Date de publication du fascicule du brevet: 07.10.87

(51) Int. Cl.⁴: **G 02 B 6/34**

(21) Numéro de dépôt: **84400645.2**

(22) Date de dépôt: **30.03.84**

(54) Multiplexeur-démultiplexeur de longueurs d'onde, et procédé de réalisation d'un tel ensemble.

(30) Priorité: **31.03.83 FR 8305364**

(43) Date de publication de la demande:
**10.10.84 Bulletin 84/41**

(45) Mention de la délivrance du brevet:
**07.10.87 Bulletin 87/41**

(84) Etats contractants désignés:
**AT BE CH DE FR GB IT LI LU NL SE**

(56) Documents cités:
**EP-A-0 083 542**
**WO-A-82/01631**
**PATENTS ABSTRACTS OF JAPAN, vol. 4, no. 138 (P-29)620r, 27 septembre 1980, page 46 P 29**
**ELEKTRONIK, vol. 31, no. 12, juin 1982, pages 80-86, Munich, DE; H.F. MAHLEIN: "Optische Nachrichtenübertragung im Wellenlängenmultiplex"**

(73) Titulaire: **INSTRUMENTS S.A.**
**25, avenue de l'Opéra**
**F-75001 Paris (FR)**

(72) Inventeur: **Laude, Jean-Pierre**
**3 rue des Graveriots**
**F-91690 St. Cyr la Riviere par Saclas (FR)**
Inventeur: **Flamand, Jean**
**33 rue Gustave Robin**
**F-92290 Chatenay-Malabry (FR)**
Inventeur: **Pitois, Gérard Résidence La Prairie**
**Bât. D5 avenue de la République**
**F-91290 Arpajon (FR)**
Inventeur: **Lepere, Didier**
**14, rue des Pommerets**
**F-92310 Sevres (FR)**

(74) Mandataire: **Phélip, Bruno et al**
**c/o Cabinet Harlé & Phélip 21, rue de la Rochefoucauld**
**F-75009 Paris (FR)**

Courier Press, Leamington Spa, England.

# Description

La présente invention concerne un multiplexeur-démultiplexeur de longueurs d'onde à réseau de diffraction plan et miroir concave, plus particulièrement destiné à constituer un composant pour des installations de télétransmissions par fibres optiques. Elle concerne aussi un procédé de réalisation d'un tel ensemble.

"Elektronik" vol. 31 (1982), jure, numéro 2 décrit et illustre notamment sur la figure 8 un multiplexeur comprenant un bloc d'adhésif porte fibres dans lequel les fibres d'entrée et de sortie sont noyées avec leur extrémité affleurant sur la surface plane de contact avec l'élément suivant un élément porte réseau avec une face plane de contact avec l'élément porte fibres et une face plane opposée où est formé le réseau de diffraction à l'exception de la zone angulaire d'acceptance des rayons lumineux dans l'âme des fibres.

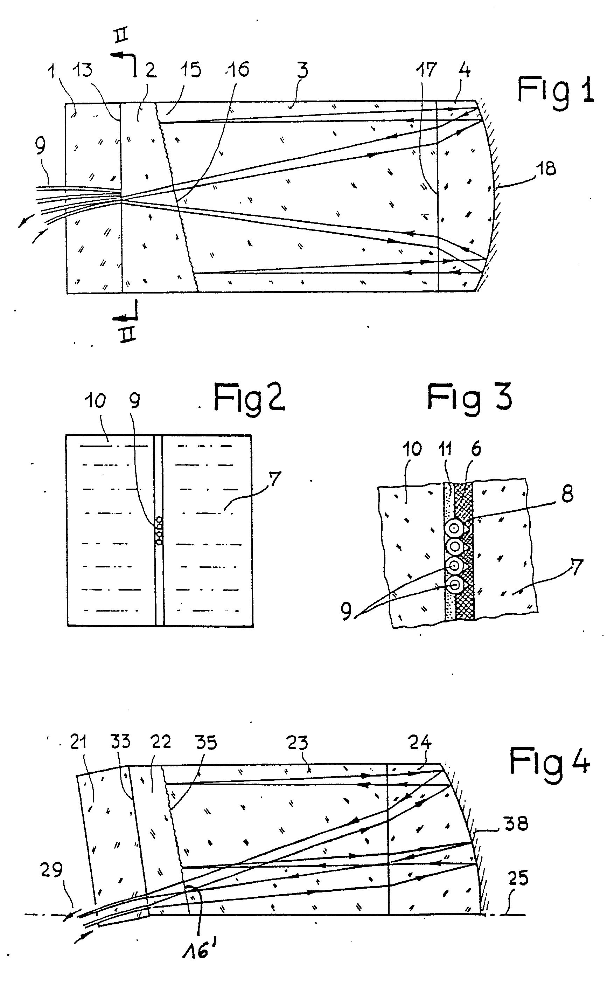

WO—A—82/01 631 décrit et illustre notamment sur la figure 3 une structure optique constituée de trois parties un corps, une partie intermédiaire renfermant un réflecteur incurvé et un prisme muni d'un réseau.

On connaît par le brevet français publié sous le n°2.479.981. et plus particulièrement par sa deuxième addition publiée sous le n°2.496.260, un ensemble monobloc permettant de regrouper dans une même fibre de transmission à longue distance plusieurs lumières de longueurs d'onde différentes amenées par autant de fibres d'entrée ou bien, en fonctionnement inverse de séparer et de répartir vers plusieurs fibres de sortie plusieurs lumières de longueurs d'onde différentes amenées ensemble par une même fibre de transmission.

Dans un tel dispositif les extrémités des fibres d'entrée et de sortie sont noyées dans un premier block transparent et débouchent dans un orifice ménagé dans un réseau plan de diffraction formé sur une face de ce premier bloc. Par cette face portant le réseau le premier bloc est collé à un second dont la face opposée forme un miroir sphérique, ou de préférence parabolique, dont le foyer est au voisinage immédiat des extrémités des fibres.

Un tel ensemble est optiquement tout à fait satisfaisant mais se prête cependant mal à une production industrielle en grandes quantités comme l'exige maintenant le développement des télétransmission par fibres optiques. Une première difficulté réside en effet dans la réalisation du premier bloc pour lequel, après avoir reproduit par copiage le réseau de diffraction il est ensuite nécessaire d'effectuer une perforation en son centre pour y faire affleurer les extrémités des fibres d'entrée et de sortie; outre que cette opération peut conduire à endommager localement le réseau aux bords de l'orifice formé, il est ensuite très délicat de disposer les fibres en positions relatives correctes dans ce bloc et dans l'orifice. Une autre difficult provient du fait qu'une haute qualité de stigmatisme impose pratiquement un miroir concave parabolique plutôt qu'un miroir sphérique, et ceci conduit à des coûts de production supérieurs.

L'invention conduit à un ensemble optique facile à réaliser en grandes séries et présentant de hautes qualités de stigmatisme malgré l'utilisation d'un simple miroir sphérique.

Elle s'applique à un multiplexeur-démultiplexeur du type où les lumières de longueurs d'onde différentes à mélanger ou à séparer sont portées par des fibres optiques de transmission dont les extrémités sont disposées au voisinage immédiat du foyer d'un miroir concave associé à un réseau de diffraction plan.

La présente invention propose un multiplexeur-démultiplexeur du type où les lumières de longueurs d'onde différentes à mélanger ou à séparer sont portées par des fibres optiques de transmission dont les extrémités sont disposées au voisinage immédiat du foyer d'un miroir concave associé à un réseau de diffraction plan, comprenant quatre éléments transparents collés les uns aux autres successivement;

a) un élément porte fibres dans lequel les fibres d'entrée et de sortie sont noyées avec leur extrémité affleurant sur la surface plane de contact avec l'élément suivant,

b) un élément porte réseau avec une face plane de contact avec l'élément porte fibres et une face plane opposée où est formé le réseau de diffraction à l'exception d'une zone correspondant à la zone angulaire d'acceptance des rayons lumineux dans l'âme des fibres,

c) un élément intermédiaire de même indice que l'élément porte réseau,

d) un élément miroir avec une face plane de contact avec l'élément intermédiaire et une face sphérique opposée traitée pour constituer ledit un miroir vers le bloc intermédiaire et le réseau, cet élément miroir ayant un indice différent de celui de l'élément intermédiaire et déterminé de façon à compenser l'aberration sphérique longitudinale pour au moins l'une des longueurs d'onde incidentes utilisées.

Selon l'invention également, le procédé de réalisation d'un tel ensemble est caractérisé en ce que, après avoir formé le réseau de diffraction sur l'élément porte réseau, par un moyen usuel de reproduction par copie et recouvrement par une couche réfléchissante, celle-ci est ensuite éliminée localement par photolithographie dans la zone des cones d'ouverture des fibres, le collage entre l'élément porte réseau et l'élément intermédiaire étant réalisé au moyen d'une résine de même indice que celui du support du réseau, celui-ci étant choisi le plus proche possible de celui des éléments adjacents, et par le fait qu'au montage chaque élément est ajusté en position relative par glissement des surfaces planes de contact avant collage définitif.

L'invention sera mieux comprise en se référant à deux modes de réalisation particuliers donnés à titre d'exemple et illustrés par les dessins annexés.

La figure 1 est une coupe médiane d'un dispositif réalisé selon l'invention.

Les figures 2 et 3 sont des coupes selon II—II de la figure 1 et montrent plus particulièrement la disposition des fibres optiques d'entrée et de sortie. La figure 3 est à plus grande échelle pour mieux montrer comment les fibres ont été noyées dans le bloc.

La figure 4 est comparable à la figure 1, pour une variante de réalisation où il n'est pas nécessaire de neutraliser localement le réseau.

En se référant tout d'abord aux figures 1 à 3 on verra que le dispositif représenté assure la même fonction que celui décrit à la figure 1 de l'addition publiée sous le n°2.496.260, mais il est ici constitué en quatre éléments collés successivement les uns aux autres. L'élément 1 est un simple support des fibres optiques d'entrée et de sortie. L'élément 2 n'est que le support du réseau. L'élément 3 est un élément intermédiaire et l'élément 4 ne comporte que le miroir concave.

L'élément porte fibres 1 pourra avantageusement être réalisé en utilisant le procédé décrit par le brevet français publié sous le n°2.411.424 et concernant un connecteur de fibres optiques; il suffira de réaliser un seul des deux blocs quie seraient nécessaires pour un connecteur.

Pour augmenter la capacité de l'ensemble multiplexeur-démultiplexeur on cherchera à rendre jointives au moins deux des fibres porteuses d'une seule longueur d'onde, c'es à dire des fibres d'entrée pour un multiplexeur ou au contraire de sortie pour un démultiplexeur. Ces fibres, ainsi que la fibre porteuse de l'ensemble des longueurs d'onde, seront alignées dans une direction qui sera ensuite au montage rendue perpendiculaire à la direction des traits du réseau.

En se référant plus particulièrement à la figure 3 on verra que, comme indiqué dans le brevet 2.411.424, on réalisera d'abord par des moyens usuels une sorte de réseau dont les traits parallèles ont un entraxe égal au diamètre extérieur des fibres, puis on en réalisera des copies en résine destinées à constituer des supports de fibres. On voit ainsi sur la figure 3 un tel support 6 en résine collé sur un bloc de verre 7. Le support 6 comporte ici quatre sillons gravés 8 pour le cas d'un dispositif à une fibre de transmission de lumières mélangées et trois fibres pour porter chacune une lumière séparée. Les fibres 9 sont alors disposées chacune dans un sillon 8 puis recouvertes d'un deuxième bloc 10 avec interposition d'un couche de colle 11. Lorsque l'ensemble est finalement solidifié il suffit de scier le bloc ainsi formé puis de polir optiquement la surface de coupe pour obtenir l'une des faces du plan de joint 13 entre les éléments 1 et 2, l'élément 1 laissant échapper le faisceau des fibres 9 à raccorder aux émetteurs ou aux récepteurs ou à la ligne de transmission.

L'élémente porte réseau 2 est un bloc transparent dont une face est polie pour constituer le plan de joint 13 avec l'élément 1 et dont l'autre face porte un réseau de diffraction plan 15. Le réseau 15 est réalisé de façon usuelle, c'est à dire par copie d'un réseau original gravé ou holographique, puis recouvrement d'une couche métallique mince réfléchissante. Pour permettre le passage sans déviation de la lumière en provenance des fibres 9 ou y aboutissant il est nécessaire de neutraliser localement le réseau 15 dans la zone 16 où il traverse le cône d'ouverture des fibres, c'est à dire la zone angulaire d'acceptance des rayons lumineux dans l'âme des fibres. Pour neutraliser le réseau dans cette zone 16 on procèdera par photolithographique pour faire disparaître localement la couche réfléchissante. On observera que ceci n'entraine aucune altération du réseau en dehors de la zone traitée et en particulier à la limite de cette zone. Par ailleurs lorsque la face portant le réseau sera collée sur l'élément intermédiaire 3 de même indice que l'élément 2 il suffira d'utiliser comme colle une résine de même indice que celle de la résine formant le support du réseau 15, celle-ci étant elle-même choisie pour présenter un indice le plus proche possible de celui des deux blocs 2 et 3. Ainsi, en remplissant les sillons du support du réseau la colle rétablira une continuité optique complète permettant le passage sans déviation des rayons lumineux.

L'élément intermédiaire 3 présente simplement deux faces polies pour collage respectivement sur le réseau 15 de l'élément 2 et sur une face plane conjuguée de l'élément 4 pour former le plan de joint 17.

Sur l'élément 4 la face opposée au plan de joint 17 est une surface sphérique traitée pour former un miroir concave 18. L'élément 4 est en matériau d'indice différent et généralement inférieur à celui de l'élément intermédiaire 3.

On notera tout d'abord que le fonctionnement optique de l'ensemble ainsi réalisé est tout à fait identique à celui de l'ensemble décrit dans le brevet 2.496.260. Dans le cas d'un fonctionnement en démultiplexeur par exemple la lumière mélangée est amenée par l'une des fibres 9 dont l'extrémité est au foyer apparent du miroir 18, c'est à dire à l'emplacement de l'image de son foyer réel dans le dioptre plan 17. Après réfraction par le dioptre 17 les rayons issus de l'extrémité de la fibre sont donc renvoyés par le miroir 18 en un faisceau parallèle vers le réseau 15 qui le disperse en autant de faisceaux parallèles que de longueurs d'onde dans la lumière mélangée. Par un chemin inverse chaque faisceau parallèle est focalisé sur l'extrémité d'une fibre de sortie 9. Mais ici le choix des indices différents pour les éléments 3 et 4 permet de corriger les aberrations du miroir sphérique 18 de telle sorte qu'il n'y aura aucun inconvénient à utiliser un miroir sphérique beaucoup plus facile à réaliser industriellement qu'un miroir parabolique.

En outre l'utilisation d'un verre d'indice plus faible pour l'élément miroir 4 que pour l'élement intermédiaire 3 augmente le champ dans le plan focal où sont disposées les extrémités des fibres 9, ce qui permet d'augmenter le nombre de fibres utilisables et par conséquent la capacité du dispositif.

On notera encore que chaque élément 1, 2, 3, 4 est facile à réaliser industriellement en grandes quantités, et que le réglage de chaque ensemble résulte simplement d'un réglage de position relative d'un élément par rapport à un autre par glissement sur des surfaces planes de contact avant collage définitif.

Bien entendu on cherchera aussi à améliorer la fonction de transmission entre fibres, et par exemple dans le cas d'un multiplexeur lié à des émetteurs constitués par des diodes électroluminescentes à plage d'émission relativement large on choisira pour les fibres d'entrée des fibres dont le diamètre de coeur est supérieur à celui de la fibre de ligne de transmission; la fonction de transmission en fonction des longueurs d'onde présente alors une zone étendue plate à maximum de transmission.

Dans le cas d'émetteurs lasers le diamètre du coeur de la fibre de transmission pourra être égal ou supérieur à celui des fibres d'entrée.

La structure du multiplexeur-démultiplexeur à quatre éléments réalisés indépendamment puis assemblés par simple réglage de position et collage, qui a été décrite ci-cessus à propos d'un ensemble travaillant dans l'axe principal du miroir et à travers une zone neutralisée du réseau, peut aussi s'appliquer à un ensemble travaillant hors axe pour utiliser l'intégralité de la surface du réseau. La figure 4 montre un ensemble de ce type, également constitué de quatre éléments 21, 22, 23, 24 collés les uns aux autres. Mais ici les extrémités des fibres 29 sont orientées dans une direction faisant un angle avec l'axe principal 25 du miroir 38, de telle sorte que le cône d'ouverture 16' des fibres ne traverse pas le réseau 35. Ceci permet de laisser le réseau intact après sa formation sur l'élément et d'augmenter ainsi le rendement lumineux du système en évitant les pertes dues à une neutralisation locale du réseau. On pourra remarquer qu'alors le plan de joint entre les éléments 21 et 22 a une position angulaire différente de celle de l'exemple de la figure 1 car, dans un cas comme dans l'autre, ce plan de joint où affleurent les extrémités des fibres doit suivre le plan de focalisation des différentes longueurs d'onde après passage par l'élément miroir et l'élément intermédiaire. L'orientation de ce plan de focalisation est différente selon que l'on travaille dans l'axe du miroir spérique (fig. 1) ou hors axe (fig. 4).

De même, aussi bien dans la forme de réalisation de la figure 1 que dans celle de la figure 4 on s'attachera, lors de la réalisation du réseau original et dans la détermination de la forme de l'élément porte réseau 2 ou 22, à ce que les plans principaux des facettes du réseau soient sensiblement parallèles au plan 13 ou 33 de contact entre les éléments 1 et 2 ou 21 et 22.

Un ensemble multiplexeur de trois longueurs d'onde respectivement de 0,8, 1,06 et 1,3 microns a été déterminé selon la disposition de la figure 4 avec un élément miroir en silice d'indice 1,444 sur lequel est formé un miroir sphérique de rayon 63,48 mm. L'élément porte réseau et l'élément intermédiaire sont en verre vendu par la Société SOVIREL sous la référence FBS E0046 dont l'indice est de 1,771.

**Revendications**

1. Multiplexeur-démultiplexeur du type où les lumières de longueurs d'onde différentes à mélanger ou à séparer sont portées par des fibres optiques (9) de transmission dont les extrémités sont disposées au voisinage immédiat du foyer d'un miroir concave (18) associé à un réseau de diffraction plan (15), comprenant quatre éléments transparents collés les uns aux autres successivement:

a) un élément (1) porte fibres dans lequel les fibres (9) d'entrée et de sortie sont noyées avec leur extrémité affleurant sur la surface plane (13) de contact avec l'élément suivant,

b) un élément (2) porte réseau avec une face plane (13) de contact avec l'élément porte fibres et une face plane opposée où est formé le réseau de diffraction (15) à l'exception d'une zone correspondant à la zone angulaire (16, 16') d'acceptance des rayons lumineux dans l'âme des fibres (9),

c) un élément (3) intermédiaire de même indice que l'élément porte réseau (2),

d) un élément miroir (4) avec une face plane (17) de contact avec l'élément intermédiaire (3) et une face sphérique opposée traitée pour constituer ledit miroir (18) vers le bloc intermédiaire et le réseau, cet élément miroir ayant un indice différent de celui de l'élément intermédiaire et déterminé de façon à compenser l'aberration sphérique longitudinale pour au moins l'une des longueurs d'onde incidentes utilisées.

2. Multiplexeur-démultiplexeur selon revendication 1, caractérisé par le fait que le plan de contact (13) entre l'élément porte fibres (1) et l'élément porte réseau (2) correspond au plan de focalisation des différentes longueurs d'onde après passage dans l'ensemble formé par l'élément miroir (4) et l'élément intermédiaire (3).

3. Multiplexeur-démultiplexeur selon l'une quelconque des revendications précédentes, caractérisé par le fait que les plans principaux des facettes du réseau (15) sont approximativement parallèles au plan de contact (13) entre l'élément porte fibres et l'élément porte réseau.

4. Multiplexeur-démultiplexeur selon l'une quelconque des revendications précédentes, caractérisé par le fait que les fibres (9) sont alignées dans une direction perpendiculaire aux traites du réseau, deux au moins des fibres portant les lumières séparées étant jointives.

5. Procédé de réalisation d'un multiplexeur-démultiplexeur selon l'une quelconque des revendications précédentes, caractérisé par le fair qu'après avoir formé le réseau de diffraction (15) sur l'élément porte réseau (2) par un moyen usuel de reproduction par copie et recouvrement par une couche réfléchissante, celle-ci est ensuite éliminée localement par photolithographique dans la zone (16) des cônes d'ouverture des fibres, le collage entre l'élément porte réseau et l'élément intermédiaire étant réalisé au moyen d'une résine de même indice que celui du support du réseau, celui-ci étant choisi le plus proche possible de celui des deux éléments adjacents, et par le fait qu'au montage chaque élément est ajusté en position relative par glissement des surfaces planes de contact avant collage définitif.

## Patentansprüche

1. Multiplexer-Demultiplexer des Typs, bei dem die zu mischenden oder zu trennenden Lichtstrahlen unterschiedlicher Wellenlängen durch Lichtleitfasern (9) geleitet werden, deren Enden in unmittelbarer Nähe des Fokus eines konkaven Spiegels (18) angeordnet sind, der mit einem planen Brechungsgitter (15) verbunden ist, mit vier transparenten Elementen, die sukzessive nebeneinander angeordnet sind:

a) einem Fasertragelement (1), in dem die Eingangs- und Ausgangsfasern (9) mit ihrem auf die plane Berührungsoberfläche (13) mit dem folgenden Element austretenden Ende eingebettet sind,

b) einem Gittertragelement (2), das eine plane Berührungsfläche (13) mit dem Fasertragelement und eine gegenüberliegende plane Fläche hat, an der das Brechungsgitter (15) mit Ausnahme einer Zone ausgebildet ist, die der abgewinkelten Aufnahmezone (16, 16') der Lichtstrahlen in der Seele der Fasern (9) entspricht,

c) einem Zwischenelement (3) vom gleichen Index wie das Gittertragelement (2),

d) einem Spiegelelement (4), das eine plane Berührungsfläche (17) mit dem Zwischenelement (3) und eine gegenüberliegende sphärische Fläche hat, welche so behandelt ist, daß sie den auf den Zwischenblock und das Gitter gerichteten sphärischen Spiegel (18) bildet, wobei dieses Spiegelelement einen anderen Index hat als derjenige des Zwischenelementes und derart vorgesehen ist, daß es die sphärisches Longitudinalaberration für mindestens eine der verwendeten Einfallswellenlängen kompensiert.

2. Multiplexer-Demultiplexer nach Anspruch 1, dadurch gekennzeichnet, daß die Berührungsfläche (13) zwischen dem Fasertragelement (1) und dem Gittertragelement (2) der Fokussierungsebene der unterschiedlichen Wellenlängen nach dem Eintreten in die durch das Spiegelelement (4) und das Zwischenelement (3) gebildete Einheit entspricht.

3. Multiplexer-Demultiplexer nach einem der vorhergehenden Ansprüche, dadurch gekennzeichnet, daß die Hauptebenen der Facetten des Gitters (15) annähernd parallel zur Berührungsfläche (13) zwischen dem Fasertragelement und dem Gittertragelement sind.

4. Multiplexer-Demultiplexer nach einem der vorhergehenden Ansprüche, dadurch gekennzeichnet, daß die Fasern (9) in einer rechtwinklig zu den Gitterlinien verlaufenden Richtung ausgerichtet sind, wobei mindestens zwei der die getrennten Lichtstrahlen leitenden Fasern benachbart sind.

5. Verfahren zur Herstellung eines Multiplexers-Demultiplexers nach einem der vorhergehenden Ansprüche, dadurch gekennzeichnet, daß, nach dem das Brechungsgitter (15) auf dem Gittertragelement (2) durch ein übliches Mittel zum Reproduzieren durch Kopie und Abdeckung mit einer reflektierenden Schicht gebildet worden ist, diese daraufhin örtlich durch Photolithographie in der Zone (16) der Öffnungskegel der Fasern entfernt wird, wobei die Verklebung zwischen dem Gittertragelement und dem Zwischenelement mittels eines Harzes mit gleichem Index wie derjenige des Gitterträgers erfolgt und wobei der Index des Harzes so gewählt ist, daß er dem Index der beiden angrenzenden Elemente so nahe wie möglich kommt, und dadurch daß bei der Montage jedes Element durch Gleiten der planen Berührungsflächen vor der endgültigen Verklebung in die jeweilige Position gebracht wird.

## Claims

1. Multiplexer-demultiplexer of the type in which the light components of differing wavelengths to be mixed or to be separated are carried by transmission optical fibres (9), the ends of which are disposed in the immediate vicinity of the focus of a concave mirror (18) associated with a plane diffraction grating (15), comprising four transparent elements cemented to one another in succession:

a) a fibre-carrying element (1), in which the input and output fibres (9) are embedded with their end flush on the plane surface (13) of contact with the following element,

b) a grating-carrying element (2) with a plane face (13) of contact with the fibre-carrying element and an opposite plane face at which the diffraction grating (15) is formed, with the exception of a zone corresponding to the angular zone (16, 16') of acceptance of the light rays in the core of the fibres (9),

c) an intermediate element (3) having the same index as the grating-carrying element (2),

d) a mirror element (4) with a plane face (17) of contact with the intermediate element (3) and an opposite spherical face treated to form the said mirror (18) facing the intermediate block and the grating, this mirror element having an index different from that of the intermediate element and determined in such a manner as to compensate the longitudinal spherical aberration for at least one of the incident wavelengths employed.

2. Multiplexer-demultiplexer according to Claim 1, characterized in that the plane of contact (13) between the fibre-carrying element (1) and the grating-carrying element (2) corresponds to the focal plane of the various wavelengths after passage within the assembly formed by the mirror element (4) and the intermediate element (3).

3. Multiplexer-demultiplexer according to either one of the preceding claims, characterized in that the principal planes of the facets of the grating (15) are approximately parallel to the plane of contact (13) between the fibre-carrying element and the grating-carrying element.

4. Multiplexer-demultiplexer according to any one of the preceding claims, characterized in that the fibres (9) are aligned in a direction perpendicular to the lines of the grating, at least two of the fibres carrying the separated light components being contiguous.

5. Process for producing a multiplexer-demultiplexer according to any one of the preceding claims, characterized in that, after having formed the diffraction grating (15) on the grating-carrying element (2) by a conventional means of reproduction by copying and covering by a reflecting layer, the latter is then removed locally by photolithography in the zone (16) of the aperture cones of the fibres, the cementing between the grating-carrying element and the intermediate element being effected by means of a resin having the same index as that of the support of the grating, this being selected to be as close as possible to that of the two adjacent elements, and in that on assembly each element is adjusted in relative position by sliding of the plane contact surfaces prior to final cementing.

0 121 482

Fig 1

Fig 2

Fig 3

Fig 4

1